# EUROPEAN PATENT SPECIFICATION

(11) **EP 1 661 375 B1**
(45) Date of publication and mention of the grant of the patent: **18.04.2018**
(21) Application number: 03817737.4
(22) Date of filing: 30.10.2003
(51) Int. Cl.: H04M 1/60, H04M 1/725

(54) **SYSTEM AND METHOD OF SAFE AND AUTOMATIC ACOUSTIC VOLUME ADJUSTMENT FOR HANDSFREE OPERATION**
SYSTEM UND VERFAHREN FÜR EINE SICHERE UND AUTOMATISCHE ANPASSUNG DES AKUSTISCHEN PEGELS IM FREISPRECHBETRIEB
SYSTEME ET PROCEDE DE REGLAGE AUTOMATIQUE FIABLE DU VOLUME SONORE POUR UN FONCTIONNEMENT MAINS LIBRES

(30) Priority: 01.08.2003 US 491878 P
(43) Date of publication of application: 31.05.2006
(73) Proprietor: BlackBerry Limited, Waterloo, ON N2K 0A7 (CA)
(72) Inventor: HAWKER, Larry, E., Waterloo, Ontario N2T 2W6 (CA); KYOWSKI, Timothy, H., Brantford, Ontario N3P 1Z8 (CA); TOEWS, Dan, J.A., Nepean, Ontario K2E 6B7 (CA)
(74) Representative: MERH-IP Matias Erny Reichl Hoffmann Patentanwälte PartG mbB
(86) International application number: PCT/CA2003/001660
(87) International publication number: WO 2005/013587

(56) References cited:
- EP-A- 0 564 160
- EP-A- 1 244 279
- WO-A-00/79769
- DE-A- 10 208 096
- FR-A- 2 802 044

## Description

### TECHNICAL FIELD

This application relates to systems and methods for handsfree volume adjustment on mobile communication devices.

### BACKGROUND ART

Mobile telephony devices, such as cellular telephones and cordless telephone handsets, must meet strict acoustic safety requirements defined by national and international governing boards. Such operational standards include those set by the Canadian Standards Association (CSA) and Underwriters Laboratories, Inc. (UL). These operational standards and requirements are created to protect users from potential hearing damage caused by acoustic radiation. In Canada, for example, telecommunication devices must conform to the CSA 60950 and/or UL 60950 standards. Clause 6.5.3 of the CSA 60950 standard states that "the maximum steady-state A-weighted sound pressure measured at the earpiece of the telephone handset or headset shall be limited to reduce the risk of permanent hearing damage due to long duration disturbances (> 0.5s) that may occur under normal operation." In order to meet such requirements, the acoustic output level of the receiver at the earpiece of the mobile device must be limited.

The mobile device may include a "handsfree" mode of operation in which the mobile device uses a loudspeaker or similar transducer device to conduct voice communications. During handsfree mode, the device is to be held in the hand or placed on a surface at a distance away from the ear and a speaker on the device enunciates the incoming call. Examples of handsfree operation include the Nextel Direct-Connect service, teleconference calls on a desktop speakerphone, and speakerphone operation on mobile phones or cordless telephone handsets.

If the handsfree mode of operation is selected when the loudspeaker is near the user's ear, then the acoustic level of the sound generated by the loudspeaker may exceed a safe volume level until the user either lowers the volume or moves the mobile device away from his or her ear. Thus, during handsfree operation, the loss in the internal or external acoustic paths may be insufficient to limit the acoustic level to a safe volume level.
Additionally, in certain usage scenarios, a user may desire to increase the acoustic level of the mobile device. For example, if the user of the mobile device receives an incoming call in a noisy environment, such as a construction site or a shopping mall, then the user may choose to increase the volume on the device so he or she can listen to the incoming call.
Other manufacturers have addressed the acoustic safety issue by implementing proximity detection hardware in the mobile communication device. For example, one manufacturer has utilized an infrared proximity detector to determine when the device is near the user's ear and to automatically switch to a lower volume operating mode.
FR-A-2802044 discloses a method of adjusting the gain of an amplifier in a mobile phone to keep the audio output below a maximum pain threshold and above a minimum audible threshold. EP0564160 discloses a personal communicator handset to operate as both a handset and as a speakerphone and to automatically switch between the two modes based on distance between the handset and the user's ear. The speaker volume in an audio/visual mode of operation for the handset is increased to compensate the increased distance to the user's ear.
DE-A-10208096 relates to a mobile device which emits high frequency signals in order to chase away dogs or martens.
EP1244279 relates to a mobile device comprising calculating means for calculating the distance between the mobile device and an object. The volume of sound signals generated by a sound generating means of the mobile device is increased for a calculated distance corresponding to a handsfree speaker function.
WO 00/79769 relates to an apparatus and method of detecting proximity by means of an antenna and controlling a loudspeaker based on the detected proximity.

### DISCLOSURE OF THE INVENTION

The invention is defined in the independent claims, the dependent claims relate to preferred embodiments.

### BRIEF DESCRIPTION OF THE DRAWINGS

Embodiments of the present invention will now be described, by way or example only, with reference to the attached Figures, wherein
Figs.1 and 2 are front and back views of an embodiment of a mobile communication device;
Fig. 3 is a block diagram illustrating another embodiment of the mobile communication device;
Fig. 4 is an exemplary system block diagram of a volume adjustment system for use in a mobile communication device; and
Fig. 5 is a flow diagram illustrating the processing of a voice communication on a mobile communication device.

### BEST MODE FOR CARRYING OUT THE INVENTION

A mobile communication device typically has a display, a receiver, a microphone, a loudspeaker, and software to control acoustic levels. For example, when an incoming call is received on a user's mobile device, the user can answer the call using either a handset mode of operation, a headset mode of operation, or a handsfree mode of operation. If the user selects either the handset or headset mode of operation, then the device defaults to a handset volume profile. If the user selects the handsfree mode of operation, however, then the device switches to a handsfree mode of operation in which the loudspeaker is used.
During handsfree conversations, the device is usually an arms-length away from the user's ears. To compensate for the increased distance, these devices incorporate a higher volume profile. In certain situations, the user may bring the device in handsfree mode close to their ear such that the sound level may be high enough at the ear to cause hearing damage. For example, the user may switch from a handset mode to a handsfree mode while the mobile device is pressed against the user's ear. Accordingly, the resulting sound level at the user's ear may not pass acoustic safety requirements such that the device manufacturer may not be able to sell the device to operate in handsfree mode.

Thus, in one embodiment, upon selection of a handsfree mode of operation, the mobile device switches to a safe volume profile so that the call is conducted with a lower volume setting. In another embodiment, this lower volume setting is selected such that the volume is within a safe volume level even if the mobile device is pressed against the user's ear. The safe volume profile in handsfree mode enables the user to carry on a conversation without causing hearing damage.

In another embodiment, the mobile device is initiated in a low volume setting that conforms to acoustic safety standards. After the call is connected, the user is free to adjust the volume, as necessary, to a level appropriate for the listening environment. For example, the user may turn up the volume if the user is hard of hearing or if the user is in a construction environment with loud background noise.

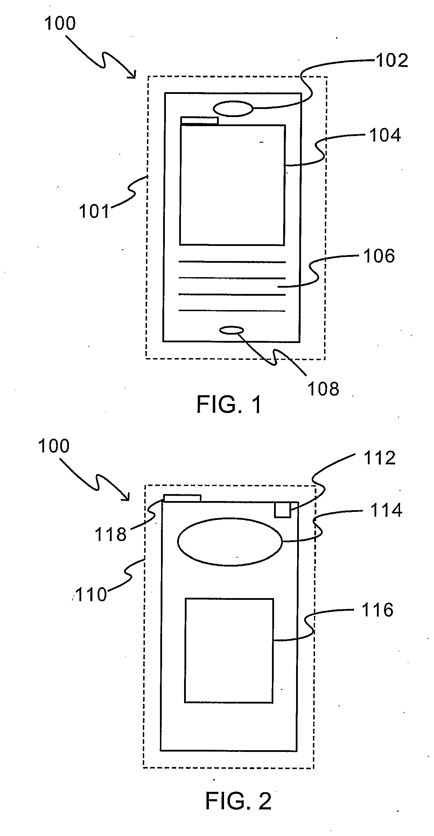

Figs. 1 and 2 are front and back views of a mobile communication device 100. The mobile communication device 100 has a front side 101, as depicted in Fig. 1, and a back side 110, as depicted in Fig. 2. The front side 101 of the device 100 includes several components, such as a receiver 102, a device display 104, a keyboard 106, and a microphone 108. The backside 110 of the device 100 also includes several components, such as a headset jack 112, a speakerphone device 114, a battery housing 116, and an antenna 118. The placement of the above components may vary depending on the particular mobile device 100 used. For example, some, or even all, of the above components may be located on the front side 101 of the mobile device 100.

The receiver 102 may be a transducer that modulates an electrical sound signal to a voice audio signal. The receiver 102 has a limited volume setting and is generally not suitable for handsfree operation, as it is designed to be placed in close proximity to the user's ear.

The microphone 108 may be a transducer operable to convert an audio signal into an electronic signal. The user speaks into the microphone 108 and the electronic signal generated is then processed and transmitted by the antenna 118. The transmission may be received by a cellular network, such as the case in which the mobile device 100 is a cellular telephone, or may be received by a telephone base, such as the case in which the mobile device 100 is a handset of a cordless telephone.

The headset jack 112 is used to connect an external headset system for communication. An example of an external headset system may be a set of two small ear-bud receivers to be placed in the user's ears and a cord with a built-in microphone located on the cord. To communicate in a headset mode, the user inserts the headset connector into the headset jack 112, inserts the ear-buds into his or her ears and speaks into the microphone on the cord.

The speakerphone device 114 includes its own loudspeaker and microphone circuitry and is designed for both voice input through the microphone and broadcasting of voice output through the loudspeaker. The speakerphone device 114 generates a larger acoustic output signal than the receiver 102 so that the user can hear the incoming call even when the device 100 is placed away from the user's ear.

The device may also include a display 104 that displays a text or graphic output to the user, and a keyboard 106 designed to receive text input. Some mobile communication devices may not have a keyboard 106, but may include other text input mechanisms, such as a number-pad designed for number entry or a touch-screen for text or graphic entry. The back surface of the device also includes a battery housing 116 to hold a battery in place.

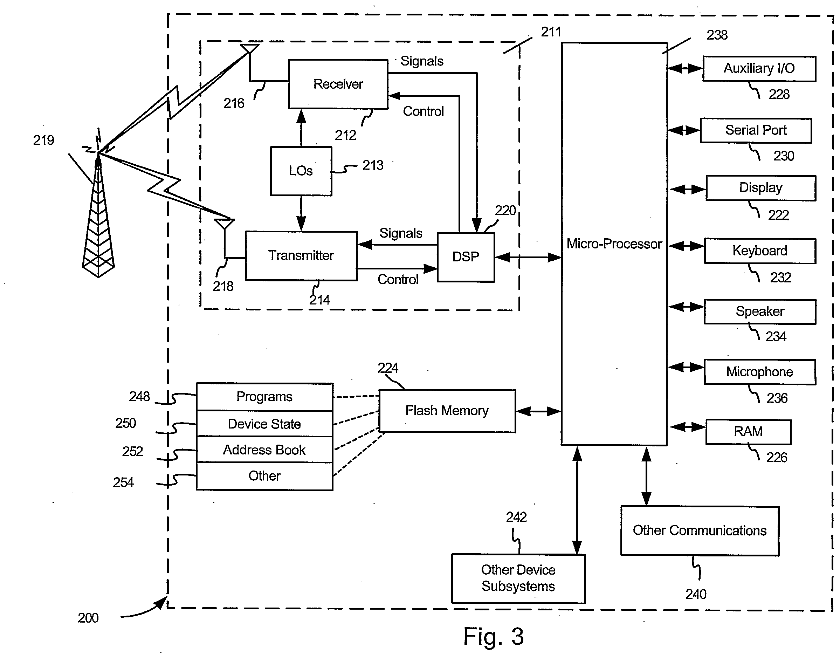

Fig. 3 is a block diagram illustrating another embodiment of a mobile communication device 200. The mobile device 200 is a two-way wireless electronic communication device having at least voice and data communication capabilities. The mobile device 200 may have the capability to communicate with other computer systems on the Internet. Depending on the exact functionality provided, the mobile device may be referred to as a data messaging device with voice communication capability, a cellular telephone with data messaging capabilities, a wireless Internet appliance with voice communication capability, or a data and voice communication device, for example.

The mobile device 200 incorporates a communication antenna subsystem 211, including both a receiver 212 and a transmitter 214, as well as associated components such as one or more antenna elements 216 and 218, local oscillators (LOs) 213, and a processing module such as a digital signal processor (DSP) 220. The particular design of the communication subsystem 211 is dependent upon the communication network in which the device is intended to operate.

The mobile device 200 also includes a microprocessor 238 that controls the overall operation of the device. Communication functions are performed through communication subsystem 211. The microprocessor 238 also interacts with further device subsystems such as the display 222, flash memory 224, random access memory (RAM) 226, auxiliary input/output (I/O) subsystems 228, serial port 230, keyboard 232, speaker 234, microphone 236, a short-range communications subsystem 240 and any other device subsystems generally designated as 242. Flash memory 224 may store programs 248, a device state 250, an address book,252, or other data 254.

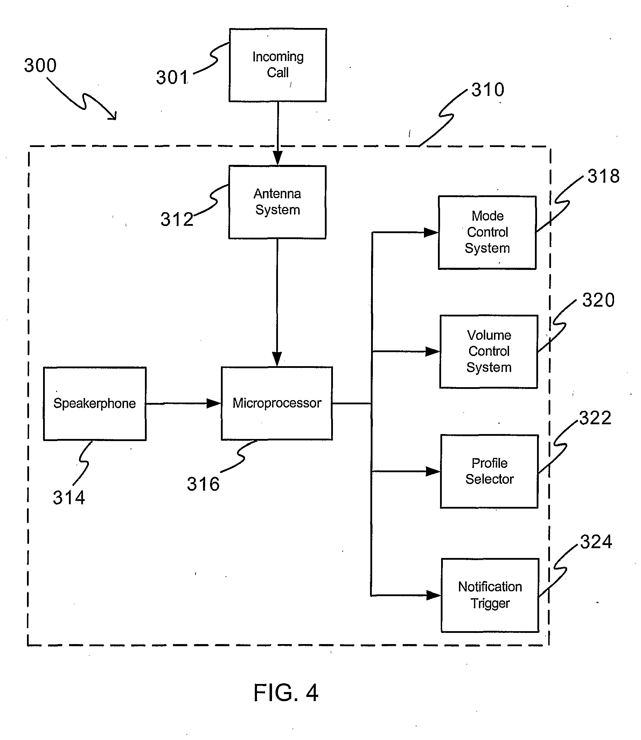

Fig. 4 is an exemplary system block diagram of a volume adjustment system 300 that may be used in a mobile communication device 310. The mobile device 310 may be of the types shown in Figs. 1-3. An incoming call 301 is received on the mobile device 310 by the antenna system 312. The incoming call is sent to the microprocessor 316 to be processed, whereby the different subsystems are assigned to process one or more elements of the call.

These device subsystems include a mode control system 318, a volume control system 320, a profile selector 322 and a notification trigger 324. These systems may be realized by software instructions, or by a combination of software instructions and associated hardware. The mode control system 318 controls the different operational modes on the device, including handset, headset and handsfree modes. Handset mode is used when answering the device by placing the receiver in proximity to the user's ear and speaking through the microphone. Headset mode is used when attaching an external headset or earpiece to the headset jack of the device for voice communication. Handsfree mode is used when using the speakerphone subsystem 314 on the device 300.

The volume control system 320 modulates the different volume levels available. The volume levels may be adjusted manually, or may be automatically adjusted according to a volume profile associated with an operational mode. The profile selector 322 operates in conjunction with the mode control system 318 to determine an associated volume profile to use. The notification trigger 324 selects a notification method once a call is received. Different notification methods include vibration, a ring tone, a blinking light and/or a combination of any of the above.

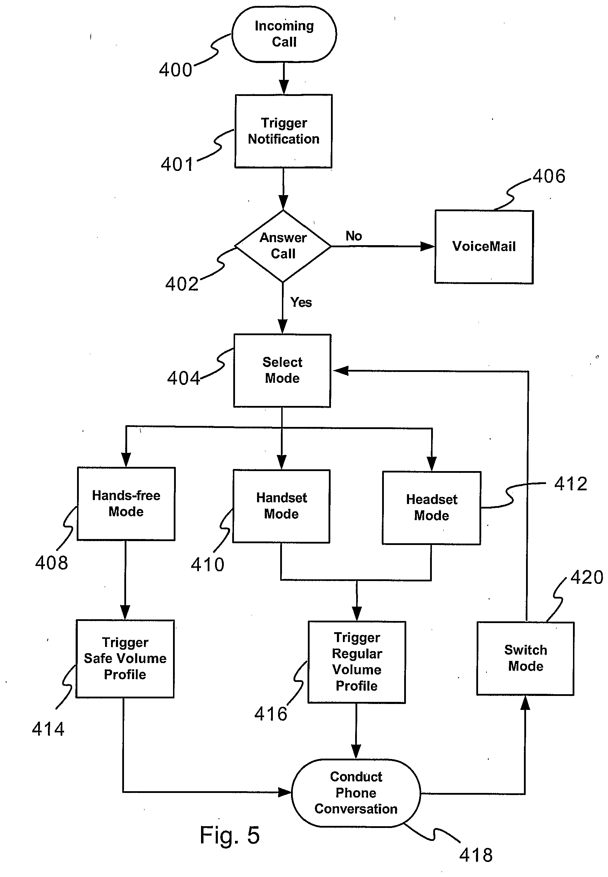

Fig. 5 is a flow diagram illustrating the processing of a voice communication on the mobile communication device 300. The process is initiated by an incoming voice call 400. The device notification system is triggered 401 and a notification is provided to the user to notify the user of an incoming call. Notifications include an audible ring tone, a vibrating motion, or a blinking LED light.

The recipient of the call, the device user, has a choice on whether to answer the call in step 402. If the user decides not to answer the call, then the incoming call is redirected to the device's voicemail system 406 where the caller can leave a voice message. The voicemail system 406 can also be activated if the device is turned off or a notification is triggered and the user is unable to answer the call.

If the user decides to answer the call in step 402, the user then selects an operational mode in step 404 to answer the call. The mode may be selected from one of a plurality of operational modes, including handsfree mode 408, handset mode 410 or headset mode 412. If the user chooses to answer the call using either a handset mode 410 or headset mode 412, then a handset volume profile is triggered at step 416 in which the device utilizes the default handset volume level to conduct the phone conversation at step 418. However, if the user selects handsfree mode 408, then the device triggers a safe volume profile in step 414 to conduct the conversation at step 418.

In one embodiment, the safe volume profile 414 is designed to meet CSA and UL requirements for acoustic safety. The safe volume profile 414 is an acoustically safe, lower volume profile that allows users to safely listen to the incoming call in handsfree mode without damaging the user's hearing, even if the mobile device is next to the user's ear. The safe volume profile 414 may be customized by the user to allow the user to change the volume level to a higher or lower preset volume after the first few seconds of conversation at the preset level. For example, if the user is in a noisy environment, then the user may increase the volume level.

During the phone conversation 418, if the user decides to switch modes, as shown in step 420, then another operating mode may be selected in step 404. The device software monitors for a mode change, and switches to operate in the volume profile associated with the newly-selected operational mode. For example, a user may initially answer a call using handset mode 410 and place the device to his ear during the phone conversation 418. The device is initially set to the handset volume profile 416. In the middle of the conversation, the user decides to switch modes to a handsfree mode 408. The user selects the handsfree mode 408, and the device switches to a safe volume profile 414. Thus, if the user has not moved the mobile device from his or her ear, the user's hearing will not be damaged. The user may thereafter adjust the volume of the mobile device to conduct a conversation in handsfree mode.

In another embodiment, the safe volume profile defines a maximum safe volume. The initial default preset volume in the safe volume profile may be adjusted. The adjusted volume is then compared to the maximum safe volume, and if the adjusted volume exceeds the maximum safe volume, then adjustment of the volume level from the preset volume level to the adjusted volume level is prevented.

This written description uses illustrative embodiments to disclose the invention, including the best mode, and also to enable a person of ordinary skill in the art to make and use the invention. Other embodiments and devices are within the scope of the claims if they have elements that do not differ from the literal language of the claims or have elements equivalent to those recited in the claims.

## Claims

1. A method of processing a voice communication on a mobile device having a receiver (102) that modulates an electrical sound signal to a voice audio signal, a loudspeaker that broadcasts voice output and generates a larger acoustic signal than the receiver (102), and a volume control system (320) that modulates different volume levels wherein the different volume levels are adjustable according to a volume profile associated with a selected one of a plurality of mobile device operational modes including a handsfree mode of operation in which the loudspeaker is used, a handset mode and a headset mode, the method comprising the steps of:
storing a plurality of volume profiles including a safe volume profile having a lower volume setting and associated with the handsfree mode of operation;
receiving a user input selecting an operational mode of the mobile device;
using a handset volume profile if an operational mode other than the handsfree mode is selected and using the safe volume profile if the selected operational mode is the handsfree mode;wherein the safe volume profile is used such that a call is conducted with the lower volume setting if the handsfree mode of operation is selected thereby allowing a user to safely listen to a call in handsfree mode without damaging the user's hearing even if the mobile device is next to the user's ear, and
the handset volume profile is used and the call is conducted with a default handset volume level if an operational mode other than the handsfree mode is selected.

2. The method of claim 1, further comprising the step of disabling adjustment of the volume level from the safe volume level for an initial time period during operation of the mobile device in the handsfree mode of operation.

3. The method of claim 1, further comprising the steps of: defining a maximum safe volume in the safe volume profile; and preventing adjustment of the volume level from the safe volume level to a volume level that exceeds the maximum safe volume.

4. The method of claim 1, wherein the safe volume profile conforms to an operational standard.

5. The method of claim 1, wherein the mobile device comprises a cordless telephone handset.

6. The method of claim 1, wherein the mobile device comprises a cellular telephone.

7. A computer readable medium storing mobile device operational instructions, the mobile device operational instructions being operable to be executed by a mobile device, the mobile device having a receiver (102) that modulates an electrical sound signal to a voice audio signal, a loudspeaker that broadcasts voice output and generates a larger acoustic signal than the receiver (102), and a volume control system (320) that modulates different volume levels wherein the different volume levels can be adjusted according to a volume profile associated with a selected one of a plurality of mobile device operational modes including a handsfree mode of operation in which the loudspeaker is used, a handset mode and a headset mode, and upon execution said instructions cause the mobile device to:
store a plurality of volume profiles including a safe volume profile having a lower volume setting and associated with the handsfree mode of operation;
receive a user input selecting an operational mode of the mobile device;
use a handset volume profile if an operational mode other than the handsfree mode is selected and using the safe volume profile if the selected operational mode is the handsfree mode;
wherein the safe volume profile is used such that a call is conducted with the lower volume setting if the handsfree mode of operation is selected thereby allowing a user to safely listen to a call in handsfree mode without damaging the user's hearing even if the mobile device is next to the user's ear, and
the handset volume profile is used and the call is conducted with a default handset volume level if an operational mode other than the handsfree mode is selected.

8. A mobile device having a receiver (102) configured to modulate an electrical sound signal to a voice audio signal, a loudspeaker configured to broadcast voice output and generate a larger acoustic signal than the receiver (102), and a volume control system (320) configured to modulate different volume levels wherein the different volume levels are adjustable according to a volume profile associated with a selected one of a plurality of mobile device operational modes including a handsfree mode of operation in which the loudspeaker is used, a handset mode and a headset mode, the mobile device being operable to execute voice communication operations and comprising:
means for storing a plurality of volume profiles including a safe volume profile having a lower volume setting and associated with the handsfree mode of operation;
means for receiving a user input selecting an operational mode of the mobile device;
means for using a handset volume profile if an operational mode other than the handsfree mode is selected and using the safe volume profile if the selected operational mode is the handsfree mode;
wherein the safe volume profile is used such that a call is conducted with the lower volume setting if the handsfree mode of operation is selected thereby allowing a user to safely listen to a call in handsfree mode without damaging the user's hearing even if the mobile device is next to the user's ear, and
the handset volume profile is used and the call is conducted with a default handset volume level if an operational mode other than the handsfree mode is selected.

9. The mobile device of claim 8, further comprising:
means for disabling adjustment of the volume level from the safe volume level for an initial time period during operation of the mobile device in the handsfree mode.

## Patentansprüche

1. Ein Verfahren zum Verarbeiten einer Sprachkommunikation auf einer mobilen Vorrichtung, die einen Empfänger (102) hat, der ein elektrisches Tonsignal in ein Sprachaudiosignal moduliert, einen Lautsprecher, der eine Sprachausgabe aussendet und ein größeres akustisches Signal als der Empfänger (102) erzeugt, und ein Lautstärkesteuersystem (320), das verschiedene Lautstärkepegel moduliert, wobei die verschiedenen Lautstärkepegel gemäß einem Lautstärkeprofil anpassbar sind, das mit einem ausgewählten einer Vielzahl von Betriebsmodi der mobilen Vorrichtung assoziiert ist, einschließlich eines Freisprechbetriebsmodus, in dem der Lautsprecher verwendet wird, eines Handgerätmodus und eines Kopfhörermodus, wobei das Verfahren die Schritte aufweist:
Speichern einer Vielzahl von Lautstärkeprofilen, einschließlich eines "sichere Lautstärke"-Profils, das eine niedrigere Lautstärkeeinstellung hat und mit dem Freisprechbetriebsmodus assoziiert ist;
Empfangen einer Benutzereingabe zum Auswählen eines Betriebsmodus der mobilen Vorrichtung;
Verwenden eines Handgerätlautstärkeprofils, wenn ein anderer Betriebsmodus als der Freisprechmodus ausgewählt ist, und Verwenden des "sichere Lautstärke"-Profils, wenn der ausgewählte Betriebsmodus der Freisprechmodus ist; wobei das "sichere Lautstärke"-Profil derart verwendet wird, dass ein Anruf mit der niedrigeren Lautstärkeneinstellung durchgeführt wird, wenn der Freisprechbetriebsmodus ausgewählt ist, wodurch einem Benutzer ermöglicht wird, in dem Freisprechmodus sicher einen Anruf zu hören, ohne das Gehör des Benutzers zu schädigen, auch wenn sich die mobile Vorrichtung neben dem Ohr des Benutzers befindet, und
das Handgerätlautstärkeprofil verwendet wird und der Anruf mit einem Standard-Handgerätlautstärkepegel durchgeführt wird, wenn ein anderer Betriebsmodus als der Freisprechmodus ausgewählt ist.

2. Das Verfahren gemäß Anspruch 1, das weiter aufweist den Schritt eines Deaktivierens einer Anpassung des Lautstärkepegels von dem "sichere Lautstärke"-Pegel für eine anfängliche Zeitperiode während des Betriebs der mobilen Vorrichtung in dem Freisprechbetriebsmodus.

3. Das Verfahren gemäß Anspruch 1, das weiter die Schritte aufweist: Definieren einer maximalen sicheren Lautstärke in dem "sichere Lautstärke"-Profil; und Verhindern einer Anpassung des Lautstärkepegels von dem "sichere Lautstärke"-Pegel auf einen Lautstärkepegel, der die maximale sichere Lautstärke übersteigt.

4. Das Verfahren gemäß Anspruch 1, wobei das "sichere Lautstärke"-Profil einem Betriebsstandard entspricht.

5. Das Verfahren gemäß Anspruch 1, wobei die mobile Vorrichtung ein schnurloses Telefonhandgerät aufweist.

6. Das Verfahren gemäß Anspruch 1, wobei die mobile Vorrichtung ein zellulares Telefon aufweist.

7. Ein computerlesbares Medium, das Betriebsanweisungen für eine mobile Vorrichtung speichert, wobei die Betriebsanweisungen für eine mobile Vorrichtung betriebsfähig sind, um von einer mobilen Vorrichtung ausgeführt zu werden, wobei die mobile Vorrichtung einen Empfänger (102) hat, der ein elektrisches Tonsignal in ein Sprachaudiosignal moduliert, einen Lautsprecher, der eine Sprachausgabe aussendet und ein größeres akustisches Signal als der Empfänger (102) erzeugt, und ein Lautstärkesteuersystem (320), das verschiedene Lautstärkepegel moduliert, wobei die verschiedenen Lautstärkepegel gemäß einem Lautstärkeprofil anpassbar sind, das mit einem ausgewählten einer Vielzahl von Betriebsmodi der mobilen Vorrichtung assoziiert ist, einschließlich eines Freisprechbetriebsmodus, in dem der Lautsprecher verwendet wird, eines Handgerätmodus und eines Kopfhörermodus, und wobei bei Ausführung die Anweisungen die mobile Vorrichtung veranlassen zum:
Speichern einer Vielzahl von Lautstärkeprofilen, einschließlich eines "sichere Lautstärke"-Profils, das eine niedrigere Lautstärkeeinstellung hat und mit dem Freisprechbetriebsmodus assoziiert ist;
Empfangen einer Benutzereingabe zum Auswählen eines Betriebsmodus der mobilen Vorrichtung;
Verwenden eines Handgerätlautstärkeprofils, wenn ein anderer Betriebsmodus als der Freisprechmodus ausgewählt ist, und Verwenden des "sichere Lautstärke"-Profils, wenn der ausgewählte Betriebsmodus der Freisprechmodus ist;
wobei das "sichere Lautstärke"-Profil derart verwendet wird, dass ein Anruf mit der niedrigeren Lautstärkeneinstellung durchgeführt wird, wenn der Freisprechbetriebsmodus ausgewählt ist, wodurch einem Benutzer ermöglicht wird, in dem Freisprechmodus sicher einen Anruf zu hören, ohne das Gehör des Benutzers zu schädigen, auch wenn sich die mobile Vorrichtung neben dem Ohr des Benutzers befindet, und
das Handgerätlautstärkeprofil verwendet wird und der Anruf mit einem Standard-Handgerätlautstärkepegel durchgeführt wird, wenn ein anderer Betriebsmodus als der Freisprechmodus ausgewählt ist.

8. Eine mobile Vorrichtung, die einen Empfänger (102) hat, der konfiguriert ist zum Modulieren eines elektrischen Tonsignals in ein Sprachaudiosignal, einen Lautsprecher, der konfiguriert ist zum Aussenden einer Sprachausgabe und Erzeugen eines größeren akustischen Signals als der Empfänger (102), und ein Lautstärkesteuersystem (320), das konfiguriert ist zum Modulieren verschiedener Lautstärkepegel, wobei die verschiedenen Lautstärkepegel gemäß einem Lautstärkeprofil anpassbar sind, das mit einem ausgewählten einer Vielzahl von Betriebsmodi der mobilen Vorrichtung assoziiert ist, einschließlich eines Freisprechbetriebsmodus, in dem der Lautsprecher verwendet wird, eines Handgerätmodus und eines Kopfhörermodus, wobei die mobile Vorrichtung betriebsfähig ist zum Ausführen von Sprachkommunikationsoperationen und aufweist:
Mittel zum Speichern einer Vielzahl von Lautstärkeprofilen, einschließlich eines "sichere Lautstärke"-Profils, das eine niedrigere Lautstärkeeinstellung hat und mit dem Freisprechbetriebsmodus assoziiert ist;
Mittel zum Empfangen einer Benutzereingabe zum Auswählen eines Betriebsmodus der mobilen Vorrichtung;
Mittel zum Verwenden eines Handgerätlautstärkeprofils, wenn ein anderer Betriebsmodus als der Freisprechmodus ausgewählt ist, und Verwenden des "sichere Lautstärke"-Profils, wenn der ausgewählte Betriebsmodus der Freisprechmodus ist;
wobei das "sichere Lautstärke"-Profil derart verwendet wird, dass ein Anruf mit der niedrigeren Lautstärkeneinstellung durchgeführt wird, wenn der Freisprechbetriebsmodus ausgewählt ist, wodurch einem Benutzer ermöglicht wird, in dem Freisprechmodus sicher einen Anruf zu hören, ohne das Gehör des Benutzers zu schädigen, auch wenn sich die mobile Vorrichtung neben dem Ohr des Benutzers befindet, und
das Handgerätlautstärkeprofil verwendet wird und der Anruf mit einem Standard-Handgerätlautstärkepegel durchgeführt wird, wenn ein anderer Betriebsmodus als der Freisprechmodus ausgewählt ist.

9. Die mobile Vorrichtung gemäß Anspruch 8, die weiter aufweist:
Mittel zum Deaktivieren einer Anpassung des Lautsprecherpegels von dem "sichere Lautstärke"-Pegel für eine anfängliche Zeitperiode während eines Betriebs der mobilen Vorrichtung in dem Freisprechmodus.

## Revendications

1. Procédé de traitement d'une communication vocale sur un dispositif mobile ayant un récepteur (102) qui module un signal sonore électrique en un signal audio vocal, un haut-parleur qui diffuse une sortie vocale et génère un signal acoustique plus important que celui du récepteur (102), et un système de commande de volume (320) qui module des différents niveaux de volume où les différents niveaux de volume sont réglables selon un profil de volume associé à un mode sélectionné d'une pluralité de modes fonctionnels de dispositif mobile comportant un mode de fonctionnement mains libres dans lequel le haut-parleur est utilisé, un mode combiné téléphonique et un mode casque d'écoute, le procédé comprenant les étapes suivantes consistant à :
stocker une pluralité de profils de volume comportant un profil de volume sûr ayant un réglage de volume inférieur et associé au mode de fonctionnement mains libres ;
recevoir une entrée d'utilisateur sélectionnant un mode de fonctionnement du dispositif mobile ;
utiliser un profil de volume de combiné téléphonique si un mode fonctionnel autre que le mode mains libres est sélectionné et utiliser le profil de volume sûr si le mode fonctionnel sélectionné est le mode mains libres, où le profil de volume sûr est utilisé de sorte qu'un appel soit lancé avec le réglage de volume inférieur si le mode de fonctionnement mains libres est sélectionné, permettant ainsi à un utilisateur d'écouter en toute sécurité un appel en mode mains libres sans endommager l'audition de l'utilisateur même si le dispositif mobile se trouve à proximité de l'oreille de l'utilisateur, et
le profil de volume de combiné téléphonique est utilisé et l'appel est lancé avec un niveau de volume de combiné téléphonique par défaut si un mode de fonctionnement autre que le mode mains libres est sélectionné.

2. Procédé de la revendication 1, comprenant en outre l'étape de désactivation de réglage du niveau de volume à partir du niveau de volume sûr pour une période initiale pendant le fonctionnement du dispositif mobile dans le mode de fonctionnement mains libres.

3. Procédé de la revendication 1, comprenant en outre les étapes consistant à :
définir un volume sûr maximal dans le profil de volume sûr ; et
empêcher le réglage du niveau de volume, du niveau de volume sûr à un niveau de volume qui dépasse le volume sûr maximal.

4. Procédé de la revendication 1, dans lequel le profil de volume sûr est conforme à une norme opérationnelle.

5. Procédé de la revendication 1, dans lequel le dispositif mobile comprend un combiné téléphonique sans fil.

6. Procédé de la revendication 1, dans lequel le dispositif mobile consiste en un téléphone cellulaire.

7. Support lisible par ordinateur stockant des instructions opérationnelles de dispositif mobile, les instructions opérationnelles de dispositif mobile ayant pour fonction d'être exécutées par un dispositif mobile, le dispositif mobile ayant un récepteur (102) qui module un signal sonore électrique en un signal audio vocal, un haut-parleur qui diffuse une sortie vocale et génère un signal acoustique plus important que celui du récepteur (102), et un système de commande de volume (320) qui module des différents niveaux de volume où les différents niveaux de volume peuvent être réglés selon un profil de volume associé à un mode sélectionné d'une pluralité de modes fonctionnels de dispositif mobile comportant un mode de fonctionnement mains libres dans lequel le haut-parleur est utilisé, un mode combiné téléphonique et un mode casque d'écoute, et lors de l'exécution, lesdites instructions amènent le dispositif mobile à :
stocker une pluralité de profils de volume comportant un profil de volume sûr ayant un réglage de volume inférieur et associé au mode de fonctionnement mains libres ;
recevoir une entrée d'utilisateur sélectionnant un mode fonctionnel du dispositif mobile ;
utiliser un profil de volume de combiné téléphonique si un mode fonctionnel autre que le mode mains libres est sélectionné et utiliser le profil de volume sûr si le mode de fonctionnement sélectionné est le mode mains libres ;
dans lequel le profil de volume sûr est utilisé de sorte qu'un appel soit lancé avec le réglage de volume inférieur si le mode de fonctionnement mains libres est sélectionné, permettant ainsi à un utilisateur d'écouter en toute sécurité un appel en mode mains libres sans endommager l'audition de l'utilisateur même si le dispositif mobile se trouve à proximité de l'oreille de l'utilisateur, et
le profil du volume de combiné téléphonique est utilisé et l'appel est lancé avec un niveau de volume de combiné téléphonique par défaut si un mode fonctionnel autre que le mode mains libres est sélectionné.

8. Dispositif mobile ayant un récepteur (102) configuré pour moduler un signal sonore électrique en un signal audio vocal, un haut-parleur configuré pour diffuser une sortie vocale et générer un signal acoustique plus important que celui du récepteur (102), et un système de commande de volume (320) configuré pour moduler des différents niveaux de volume où les différents niveaux de volume sont réglables selon un profil de volume associé à un mode sélectionné d'une pluralité de modes fonctionnels de dispositif mobile comportant un mode de fonctionnement mains libres dans lequel le haut-parleur est utilisé, un mode combiné téléphonique et un mode casque d'écoute, le dispositif mobile étant fonctionnel pour exécuter des opérations de communication vocale et comprenant :
un moyen pour stocker une pluralité de profils de volume comportant un profil de volume sûr ayant un réglage de volume inférieur et associé au mode de fonctionnement mains libres ;
un moyen pour recevoir une entrée d'utilisateur sélectionnant un mode fonctionnel du dispositif mobile ;
un moyen pour utiliser un profil de volume de combiné téléphonique si un mode opérationnel autre que le mode mains libres est sélectionné et pour utiliser le profil de volume sûr si le mode de fonctionnement sélectionné est le mode mains libres ;
dans lequel le profil de volume sûr est utilisé de sorte qu'un appel soit lancé avec le réglage de volume inférieur si le mode de fonctionnement mains libres est sélectionné, permettant ainsi à un utilisateur d'écouter en toute sécurité un appel en mode mains libres sans endommager l'audition de l'utilisateur même si le dispositif mobile se trouve à proximité de l'oreille de l'utilisateur, et
le profil de volume de combiné téléphonique est utilisé et l'appel est lancé avec un niveau de volume de combiné téléphonique par défaut si un mode fonctionnel autre que le mode mains libres est sélectionné.

9. Dispositif mobile de la revendication 8, comprenant en outre :
un moyen pour désactiver le réglage du niveau de volume du niveau de volume sûr pour une période initiale pendant le fonctionnement du dispositif mobile en mode mains libres.
